# EUROPÄISCHE PATENTSCHRIFT

(11) **EP 2 406 552 B1**
(45) Veröffentlichungstag und Bekanntmachung des Hinweises auf die Patenterteilung: **27.01.2016**
(21) Anmeldenummer: 10717028.4
(22) Anmeldetag: 09.03.2010
(51) Int. Cl.: F24F 12/00

(54) **VORRICHTUNG ZUR WÄRMERÜCKGEWINNUNG IN EINER WÄRMEAUSTAUSCHERANLAGE MIT ENERGIEEINKOPPELUNG IN LÜFTUNGSGERÄTEN**
APPARATUS FOR HEAT RECOVERY IN A HEAT EXCHANGER SYSTEM HAVING ENERGY COUPLING IN VENTILATION DEVICES
DISPOSITIF D'ÉCHANGE DE CHALEUR DANS UNE INSTALLATION DE RÉCUPÉRATION DE CHALEUR À COUPLAGE D'ÉNERGIE DANS DES APPAREILS D'AÉRATION

(30) Priorität: 09.03.2009 DE 102009011747
(43) Veröffentlichungstag der Anmeldung: 18.01.2012
(73) Patentinhaber: Hombücher, Heinz-Dieter, 63179 Obertshausen (DE)
(72) Erfinder: Hombücher, Heinz-Dieter, 63179 Obertshausen (DE)
(74) Vertreter: Stahl, Dietmar
(86) Internationale Anmeldenummer: PCT/DE2010/000252
(87) Internationale Veröffentlichungsnummer: WO 2010/102606

(56) Entgegenhaltungen:
- EP-A1- 0 222 963
- EP-A1- 1 637 813
- WO-A1-2004/072560
- DE-U1-202006 009 538
- US-A- 3 968 833

## Beschreibung

Die Erfindung betrifft ein Kreislaufverbundsystem zur mehrstufigen Wärmerückgewinnung mit Steuerung der Heiz- und Kühlleistung einer Lüftungsanlage gemäß dem Oberbegriff des Patentanspruchs 1.

Die Vorrichtung zur mehrstufigen Wärmerückgewinnung mit Steuerung der Heiz- und Kühlleistung einer Lüftungsanlage enthält eine spezielle Hydraulikeinheit, Wärmeaustauscher und alternativ eine zusätzliche Wärmepumpe.

Weiterhin ist ein Verbundsystem für mehrere Lüftungsanlagen mit Kreislaufverbundsystemen zur mehrstufigen Wärmerückgewinnung und Kälte-Wärme-Verschiebung innerhalb Verbundsystem für Lüftungsanlagen vorgesehen, alternative mit zusätzlicher integrierter Wärmepumpe.

Wärmepumpen und Kreislaufverbundsysteme mit Energieeinkopplung werden in der Lüftungstechnik zur Wärmerückgewinnung eingesetzt. Hierbei kann kalte Außenluft als Zuluft durch gezielten Wärmetransport aus der warmen Abluft vorgeheizt und ggf. auch getrocknet werden. Weiterhin kann warme Außenluft als Zuluft durch Wärmeübertragung an die Abluft gekühlt werden. Dabei wird häufig ein Wärmeträger (Wasser, Sole usw.) zur Übertragung der Energie eingesetzt.

Weiterhin sind auch Kreislaufverbundsysteme mit darin integrierten Wärmepumpen bekannt. Beispielhaft sind solche Systeme in der DE 44 08 087 C2 und dem Buch: Wärme- und Kälterückgewinnung in raumlufttechnischen Anlagen; 5., überarbeitete Auflage 2001; ISBN 3-8041-2233-7 beschrieben. Mit einer derartigen Kombination aus Kreislaufverbundsystem und Wärmepumpe lässt sich der Wirkungsgrad der Wärmerückgewinnung steigern.

WO 2004/072560 offenbart einen Kreislaufverbundsystem mit einer Einrichtung zur Energieeinkopplung und mindestens zwei Wärmeaustauschern (10, 4, 7) in einem Zuluftvolumenstrom (ZU) und mindestens einem Wärmeaustauscher (10,2) in einem Abluftvolumenstrom (AB) eines Luftbehandlungssystems.

Ebenfalls werden Wärmepumpen zur Verbindung mehrerer Lüftungsgeräte mit unterschiedlichen Luftvolumenströmen und Lufttemperaturen eingesetzt, wie dies in der WO 2005/072560 A1 beschrieben ist.

In herkömmlichen Lüftungsanlagen wird sehr häufig im Kühlfall Kälte und im Heizfall Wärme direkt oder indirekt in den Wärmeträgerkreislauf eingekoppelt. Dabei kommt es durch Temperaturverschiebung des Wärmeträgemiveaus je nach Anlage zu mehr oder weniger Verlust des Wirkungsgrades im Heizfall. Zu einem erheblichen Wirkungsgradverlust eines Kreislaufverbundsystems kommt es im Kühlfall durch die Absenkung der Temperatur des Wärmeträgers vor dessen Eintritt in den Zuluftwärmeaustauscher. Dies wird ausgeführt, um die gewünschten Zulufttemperatur zu erreichen. Dabei tritt aber der Wärmeträger mit zu niedriger Temperatur aus dem Zuluftwärmeaustauscher aus.

In DE 44 08 087 C2 ist eine Unterteilung des Wärmeträgerstromes zur Erhöhung des Massenstroms für den thermisch behandelten Wärmeträger vorgesehen. Dabei wird allerdings wiederum der Wärmeträger vor dem Eintritt in den Zuluftwärmeaustauscher zunächst gekühlt und damit mit einem zu niedrigen Temperaturniveau in den Abluftwärmeaustauscher gefördert. Diese Vorgehensweise wirkt sich wiederum nachteilig für eine Kälterückgewinnung aus der Abluft aus. Die optimalen Temperaturdifferenzen zwischen Wärmeträger und Luftstrom werden sogar in intensiver Weise negativ beeinflusst.

Mit den Lösungen nach dem beschriebenen Stand der Technik ist folglich eine Kühlung der Zulufttemperatur eines Zuluftvolumenstromes durch ein Kreislaufverbundsystem mit Kälteeinkopplung nur mit erheblicher Minderung der Leistung des Abluftwärmeaustauschers im zugehörigen Abluftvolumenstrom möglich.

Aufgabe der Erfindung ist es daher, in einem system nach dem Oberbegriff von Anspruch 1, die genannten Nachteile zu vermeiden und die Ausbeute der Kälterückgewinnung aus der Abluft bei guter Regelbarkeit der Zulufttemperatur bedeutend zu steigern, wobei der Wärmeträger direkt mit dem Verdampfer thermodynamisch behandelt werden kann oder die Kühlung des Wärmeträgers indirekt über einen Wärmeaustauscher und dem Kühlkreislauf eines Kälteerzeugers erfolgt. Dabei soll die Vorrichtung aus preiswerten handelsüblichen Komponenten gebaut werden.

Die Lösung dieser Aufgabe gestaltet sich in einem Kreislaufverbundsystem mit den Merkmalen von Anspruch 1 und wird erweitert durch eine integrierte Wärmepumpe mit den Merkmalen nach Anspruch 2

Das erfindungsgemäße Kreislaufverbundsystem besteht aus einer Wärmeaustauscheranlage, die ein Hydraulikmodul aufweist, wobei das Kreislaufverbundsystem als Paar von Wärmetauschern mit Rohrleitungsverbindung ausgebildet ist. In dem Kreislaufverbundsystem wird ein Zuluftwärmeaustauscher, der in einem Zuluftvolumenstrom angeordnet ist, mit einem Abluftwärmeaustauscher, der in einem Abluftvolumenstrom angeordnet ist, in einem Wärmeträgerkreislauf gekoppelt. Erfindungsgemäß ist in dem Kreislaufverbundsystem der genannten Wärmeaustauscheranlage wenigstens eine weitere Wärmetransfereinrichtung als Hydraulikmodul zugeordnet, mit deren Hilfe Wärme- oder Kälteenergie in die Wärmeaustauscheranlage eingekoppelt werden kann.

Die zusätzliche Wärmetransfereinrichtung, die zur Einkoppelung von Kälte- oder Wärmeenergie dient, ist als eigenständiger Wärmeträgerkreislauf oder in Verbindung mit dem Kreislaufverbundsystem schaltbar.

Weitere vorteilhafte Ausbildungen des erfindungsgemäßen Kreislaufverbundsystems ergeben sich in Verbindung mit den Unteransprüchen.

Im Folgenden wird die Erfindung in Verbindung mit zeichnerischen Darstellungen anhand eines Ausführungsbeispiels näher beschrieben.

Dabei zeigen
- Figur 1: eine prinzipielle Schaltung des erfindungsgemäßen Kreislaufverbundsystems,
- Figur 2: eine Schaltung des Kreislaufverbundsystems nach Fig. 1 in Verbindung mit einer Wärmepumpe,
- Figur 3: das Kreislaufverbundsystem nach Figur 1 in Verbindung mit einer Schichtwärmeaustauscheranordnung, und
- Figur 3A: eine Detailzeichnung eines geschichteten Wärmeaustauschers zur Verwendung in der Anordnung nach Figur 3,
- Figur 4: das erfindungsgemäße Kreislaufverbundsystem in Verbindung mit einem Vollklimagerät und
- Figur 4-1: eine Schaltung nach Figur 4 mit einer Wärmepumpe..

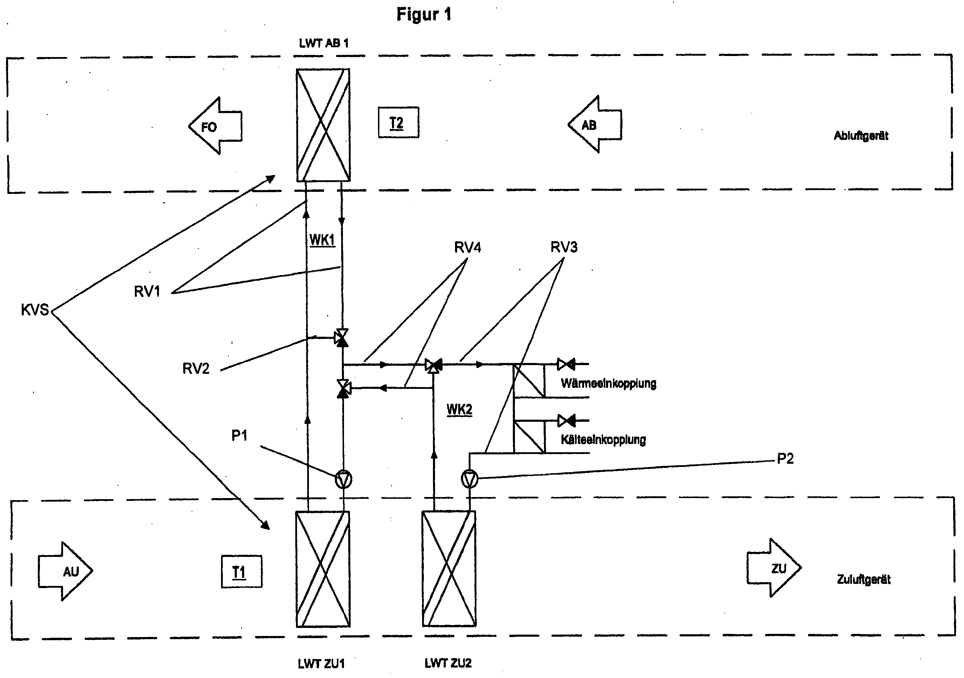

Gemäß Figur 1 besteht das erfindungsgemäße Kreislaufverbundsystem KVS aus einer Wärmeaustauscheranlage mit einem Paar von Wärmeaustauschern. Im Kreislaufverbundsystem KVS ist ein Zuluftwärmeaustauscher LWT ZU1 in einem ZULUFTGERÄT angeordnet, wird von einem Außenluftvolumenstrom AU durchströmt und gibt einen Zuluftvolumenstrom ZU ab. Weiterhin ist ein einem dem ZULUFTGERÄT parallel zugeordneten ABLUFTGERÄT ein Abluftwärmeaustauscher LWT AB1 angeordnet, wobei diesem ein Abluftvolumenstrom AB zuströmt und er einen Fortluftvolumenstrom FO abgibt. Der Zuluftwärmeaustauscher LWT ZU1 und der Abluftwärmeaustauscher LWT AB1 sind mittels einer Rohrleitungsverbindung RV1 miteinander verbunden. In der Rohrleitungsverbindung RV1 ist eine Umwälzpumpe P1 zum Fördern des Wärmeträgers in der Rohrleitungsverbindung RV1 in der durch Pfeile gekennzeichneten Richtung angeordnet.
Die Rohrleitungsverbindung RV1 weist eine ventilgesteuerte Querverbindung RV2 auf. Mittels der Querverbindung RV2 kann die Umwälzung des Wärmeträgers durch die Wärmeaustauscher LWT ZU1 und LWT AB1 reguliert werden.

Der Zuluftwärmeaustauscher LWT ZU1 in dem ZULUFTGERÄT und der Abluftwärmeaustauscher LWT AB1 in dem ABLUFTGERÄT sind also in einem Wärmeträgerkreislauf WK1 über die Rohrleitungsverbindung RV1 gekoppelt.

Erfindungsgemäß ist dem Kreislaufverbundsystem KVS wenigstens eine Energietransfereinrichtung zugeordnet, mittels mit deren Hilfe Wärme- oder Kälteenergie in die Wärmeaustauscheranlage eingekoppelt werden kann. Hierzu ist im ZULUFTGERÄT ein weiterer Zuluftwärmeaustauscher LWT ZU2 vorgesehen, der dem ersten Zuluftwärmeaustauscher LWT ZU1 zwischen Außenluftvolumenstrom und Zuluftvolumenstrom ZU in Strömungsrichtung der Luft nachgeordnet ist mit dem weiteren Zuluftwärmeaustauscher LWT ZU2 ist eine Anordnung aus einer WÄRMEEINKOPPLUNG und einer KÄLTEEINKOPPLUNG verbunden.

Die WÄRMEEINKOPPLUNG und die KÄLTEEINKOPPLUNG sind mittels hier angedeuteter Wärmeaustauscher ventilgesteuert über eine Rohrleitungsverbindung RV3 in einem Wärmeträgerkreislauf WK2 mit dem weiteren Zuluftwärmeaustauscher LWT ZU2 verbunden. In der Rohrleitungsverbindung RV3 ist eine Umwälzpumpe P2 zur Förderung des Wärmeträgers in der durch Pfeile angedeuteten Richtung angeordnet.

Weiterhin ist eine ventilgesteuerte Rohrleitungsverbindung RV4 zwischen der Rohrleitungsverbindung RV1 des Wärmeträgerkreislaufes WK1 und der Rohrleitungsverbindung RV3 des Wärmeträgerkreislaufes WK2 vorgesehen. Damit also kann der Wärmeträgerkreislauf WK2 sowohl in Verbindung mit dem Wärmeträgerkreislauf WK1 als auch unabhängig und völlig selbständig betrieben werden.

Die Betriebsweisen des erfindungsgemäßen Kreislaufverbundsystems KVS sind im Folgenden näher erläutert.

Dabei werden im Heizfall in Reihe geschaltete Zuluftwärmeaustauscher LWT ZU1 und LWT ZU2 im Zuluftvolumenstrom ZU zum Erwärmen der Zuluft genutzt, der Abluftwärmeaustauscher LWT AB1 im Abluftvolumenstrom AB wird genutzt, um der Abluft die Energie zu entziehen.

Im Kühlfall hingegen wird der Abluftwärmeaustauscher LWT AB1 im Abluftvolumenstrom AB zur Kälterückgewinnung aus der Abluft genutzt. Die Kälterückgewinnung wird dann durchgeführt, wenn eine Temperatur T-AB der Abluft im Ablaufvolumenstrom AB am Eintritt in den Abluftwärmeaustauscher LWT AB1 niedriger ist als eine Temperatur T-ZU der Zuluft im Zuluftvolumenstroms ZU am Eintritt in den Zuluftwärmeaustauscher LWT ZU1.

Im Zuluftvolumenstrom ZU sind also zwei Zuluftwärmeaustauscher LWT ZU1 und LWT ZU2 vorgesehen. Wenigstens einer der Zuluftwärmeaustauscher LWT ZU1 wird dem Kreislaufverbundsystem KVS zugeordnet, während der zweite Zuluftwärmeaustauscher LWT ZU2 mit dem separaten Wärmeträgerkreislauf WK2 verbunden ist und von dessen Wärmeträger durchströmt wird. Dabei überträgt der zweite Zuluftwärmeaustauscher LWT ZU2 extern eingebrachte Kälteenergie an den Zuluftvolumenstrom ZU, um die Zuluft weiter herabzukühlen.

Wenn keine Kälterückgewinnung im Abluftvolumenstrom AB aus der Abluft möglich ist, weil die Temperaturverhältnisse zwischen T-ZU und T-AB dies nicht erlauben, wird der Abluftwärmeaustauscher LWT AB1 nicht mehr mit Wärmeträger durchströmt. Dies wird mittels der ventilgesteuerten Querverbindung RV2 in der Rohrleitungsverbindung RV1 realisiert. Gleichzeitig werden die Zuluftwärmeaustauscher LWT ZU1 und LWT ZU 2 im Zuluftvolumenstrom ZU in Reihe geschaltet, so dass die Wärmeträgerkreisläufe WK1 und WK2 einen gemeinsamen Wärmeträgerkreislauf WK1 + WK2 bilden.
Dies wird über die ventilgesteuerte Rohrleitungsverbindung RV4 zwischen der Rohrleitungsverbindung RV1 und der Rohrleitungsverbindung RV3 realisiert. Durch den kombinierten Wärmeträgerkreislauf WK1 + WK2 wird der Wärmeträger nun insgesamt mittels der Umwälzpumpen P1 und P2 gefördert wird.

Auf diese Weise wird die Wärmeaustauscheroberfläche im Zuluftvolumenstrom ZU vergrößert. Damit wird erreicht, dass Wärmeträger in dem kombinierten Wärmeträgerkreislauf WK1, WK2 die Zuluft im Zuluftvolumenstrom ZU auf einem niedrigeren Temperaturniveau kühlen kann. Dadurch kann weiterhin die extern eingebrachte Kälteenergie mit höherer Verdampfungstemperatur erzeugt werden, was wiederum die Leistungsziffer der Kältemaschine verbessert.

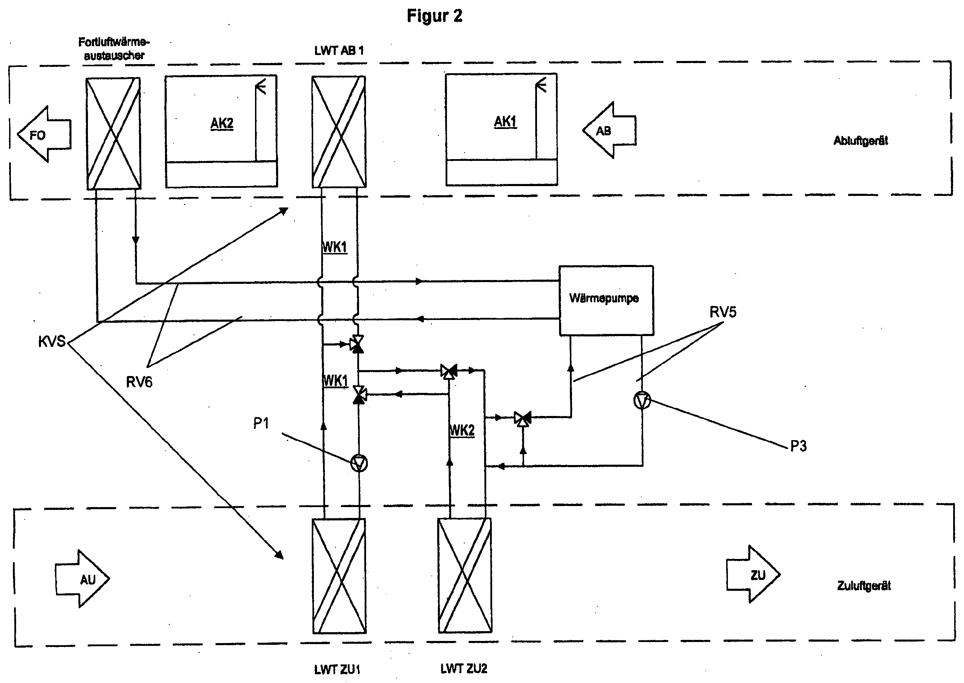

In der Ausgestaltung der Erfindung nach Figur 2 ist vorgesehen, dass einer Wärmetauscheranlage mit Kreislaufverbundsystem KVS nach Figur 1 eine in den Wärmeträgerkreislauf WK2 integrierte WÄRMEPUMPE zugeordnet ist.

Die WÄRMEPUMPE ersetzt die in Figur 1 gezeigten Einrichtungen WÄRMEEINKOPPELUNG und KÄLTEEINKOPPELUNG und ist an den Wärmekreislauf WK2 mittels einer ventilgesteuerten Rohrleitungsverbindung RV5 angekoppelt. Der Wärmeträgerkreislauf WK2 ist wie in Figur 1 mit dem Zuluftwärmeaustauscher LWT ZU2 verbunden, der dem Zuluftwärmeaustauscher LWT ZU1 des Hydraulikmoduls HM im ZULUFTGERÄT in Strömungsrichtung des Zuluftvolumenstroms ZU nachgeordnet ist.
In der Rohrleitungsverbindung RV5 ist eine Umwälzpumpe P3 angeordnet, die die Wärmeträgerumwälzung in Verbindung mit dem Wärmeträgerkreislauf WK2 ermöglicht. Die Umwälzpumpe P3 kann in Kombination mit der/den Pumpen der WÄRMEPUMPE betrieben oder auch durch die Pumpe/-n der WÄRMEPUMPE ersetzt werden.
Weiterhin ist die WÄRMEPUMPE mittels einer Rohrleitungsverbindung RV6 mit einem FORTLUFTWÄRMEAUSTAUSCHER verbunden, der im ABLUFTGERÄT dem Abluftwärmeaustauscher LWT AB1 in Strömungsrichtung des Abluftvolumenstroms AB nachgeordnet ist. Im ABLUFTGERÄT sind weiterhin eine Einrichtung AK1 zur adiabatischen Kühlung in Strömungsrichtung vor dem Abluftwärmeaustauscher LWT AB1 und eine Einrichtung AK2 zur adiabatischen Kühlung zwischen dem Abluftwärmeaustauscher LWT AB1 und dem FORTLUFTWÄRMEAUSTAUSCHER angeordnet.

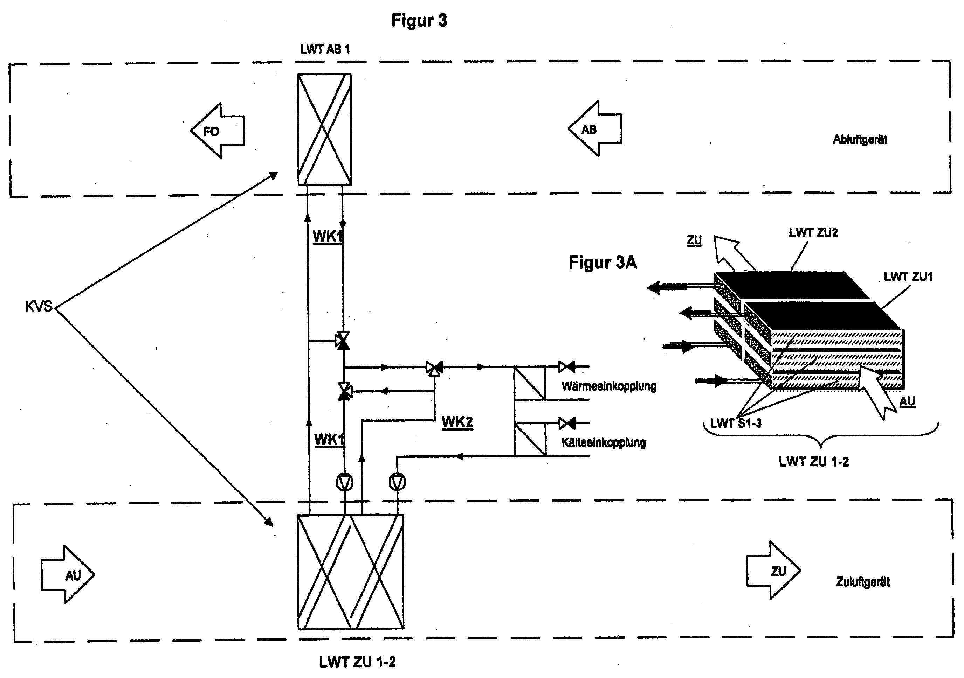

In Figur 3 ist ein Kreislaufverbundsystem KVS mit einem Hydraulikmodul gemäß Figur 1 dargestellt, wobei der Zuluftwärmeaustauscher LWT ZU1 und der Zuluftwärmeaustauscher LWT ZU2 durch einen kombinierten Blockwärmeaustauscher LWT ZU 1-2 ersetzt wurde.
In Figur 3A ist eine detailliertere Darstellung einer solchen als Schichtwärmeaustauscher ausgebildeten Einheit dargestellt.
Der Blockwärmeaustauscher LWT ZU1-2 ist aus miteinander verbundenen Wärmetauscherschichten LW S1-3 gebildet, die dabei über gemeinsame Kühlrippen einen gemeinsamen Strömungskanal bilden. Weiterhin sind auch die Wärmetauscherschichten LW S1-3 der beiden Teilwärmeaustauscher LWT ZU1 und LWT ZU2 gekoppelt, so dass die Strömungskanäle der beiden Teilwärmeaustauscher in Richtung des Außenluftvolumenstroms AU zum Zuluftvolumenstrom ZU hintereinander angeordnet sind. Auf diese Weise ist die gesamte Anordnung wesentlich kompakter anzuordnen, ohne dass Bauraum beanspruchende Inspektions- und Reinigungsräume zwischen den Wärmeaustauscherteilen vorzusehen wären.

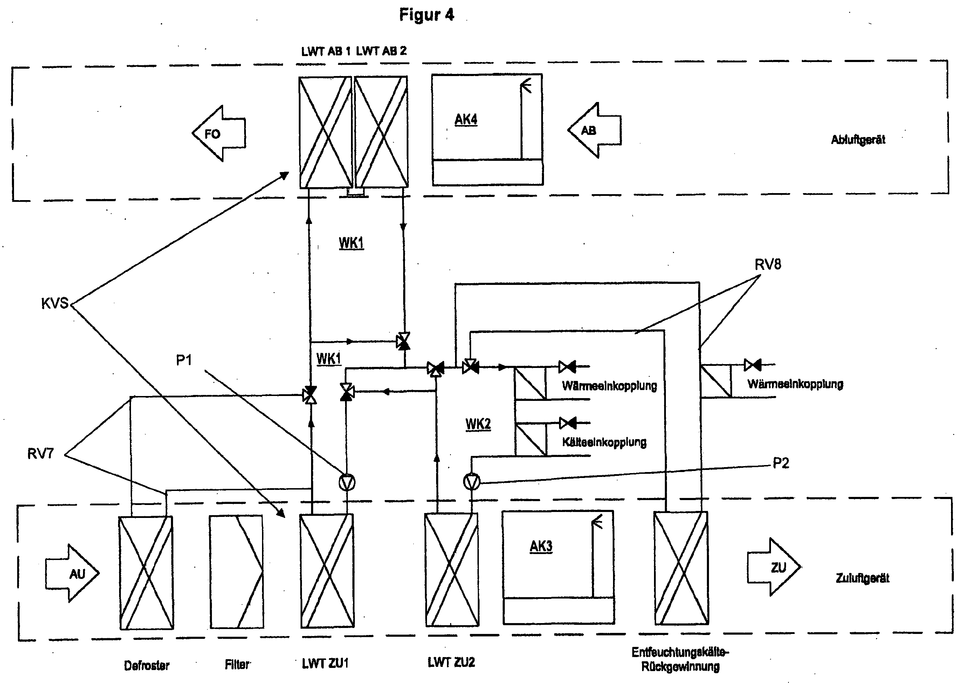

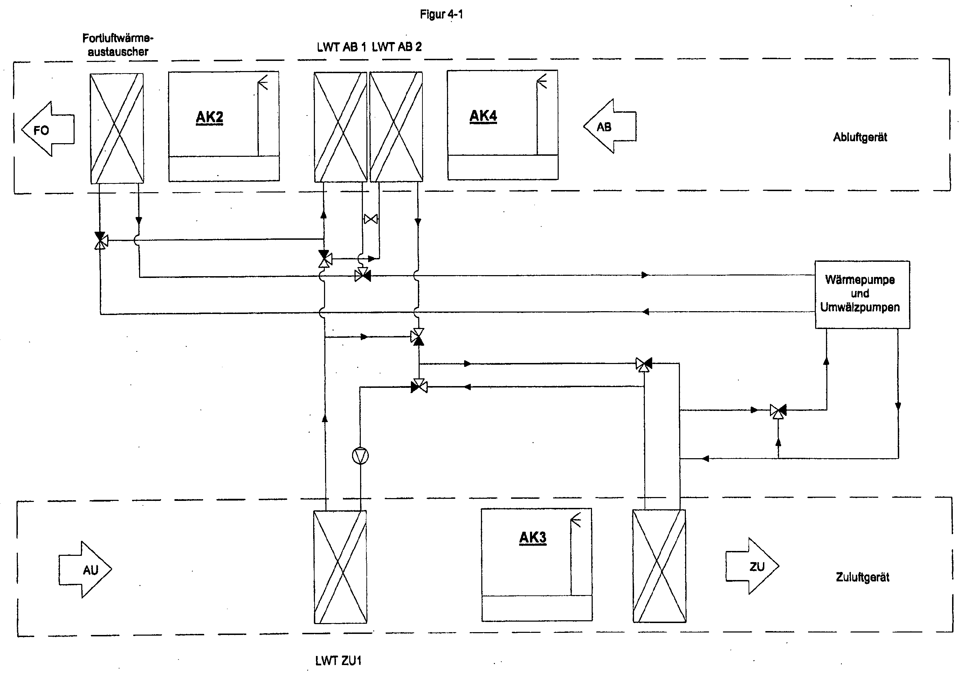

Schließlich ist in der Figur 4 das erfindungsgemäße Kreislaufverbundsystem KVS nach Figur 1 zu einem Vollklimagerät ergänzt dargestellt.
Dabei ist zunächst im ZULUFTGERÄT dem Zuluftwärmeaustauscher LWT ZU1 ein über eine Rohrleitungsverbindung RV7 mit der Rohrleitungsverbindung RV1 gekoppelter DEFROSTER ventilgesteuert vorgeordnet. Der Wärmeträger wird hier mittels der Umwälzpumpe P1 des Wärmeträgerkreislaufes WK1 gefördert.

Weiterhin ist zwischen dem DEFROSTER und dem Zuluftwärmeaustauscher LWT ZU1 ein FILTER im Strömungskanal des ZULUFTGERÄTES angeordnet.

In Strömungskanal des ZULUFTGERÄTES ist weiterhin dem Zuluftwärmeaustauscher LWT ZU2 nachgeordnet eine Einrichtung AK3 zur adiabatischen Befeuchtung vorgesehen.

Dieser Einrichtung AK3 zur adiabatischen Befeuchtung nachgeordnet ist weiterhin im Strömungskanal des ZULUFTGERÄTES in Strömungsrichtung eine ENTFEUCHTUNGSKÄLTE-RÜCKGEWINNUNG vorgesehen. Die ENTFEUCHTUNGSKÄLTE-RÜCKGEWINNUNG ist mittels einer Rohrleitungsverbindung RV8 ventilgesteuert mit dem Wärmeträgerkreislauf WK2 gekoppelt. An der Rohrleitungsverbindung RV 8 ist weiterhin eine WÄRMEEINKOPPLUNG zur Nacherwärmung des Wärmeträgers angeordnet. Der Wärmeträger wird hier mittels der Umwälzpumpe P2 des Wärmeträgerkreislaufes WK2 gefördert.

Im ABLUFTGERÄT ist der Abluftwärmeaustauscher LWTAB1 durch einen in Strömungsrichtung des Abluftvolumenstroms AB vorgeordneten weiteren Abluftwärmeaustauscher LWT AB2 ergänzt. Die Abluftwärmeaustauscher LWT AB1 und LWT AB2 sind miteinander in Reihenschaltung im Wärmeträgerkreislauf WK1 gekoppelt, wobei der Abluftwärmeaustauscher LWT AB1 zuerst vom Wärmeträger durchströmt wird. Damit wird die abluftseitige Wärmeaustauscheroberfläche in dem Kreislaufverbundsystem KVS vergrößert und die übertragbare Energiemenge gesteigert.
Schließlich ist im ABLUFTGERÄT in Strömungsrichtung vor den Abluftwärmeaustauschem LWT AB1 und LWT AB 2 noch eine Einrichtung AK4 zur adiabatischen Kühlung des Abluftvolumenstroms AB vorgesehen

In den Figuren 3 und 4 kann die Anordnung aus WÄRMEEINKOPPLUNG und KÄLTEEINKOPPLUNG jeweils gemäß Figur 2 durch die entsprechende Anordnung einer WÄRMEPUMPE ersetzt werden.

Beim Betrieb des erfindungsgemäßen Kreislaufverbundsystems KVS eröffnen verschiedene Möglichkeiten. Im Kühlfall gibt es zwei Betriebszustände.

### Betriebsfall 1

Es ist keine Kälterückgewinnung aus der Abluft möglich, zum Beispiel weil die Lufteintrittstemperatur T2 am Abluftwärmeaustauscher LWT AB 1 (wie in Fig. 1 bis 3 oder aber lt. Figur 4 LWT AB2) höher ist als die Lufteintrittstemperatur T1 am Zuluftwärmeaustauscher LWT ZU1:
Alle Wärmeaustauscher in der Zuluft (zum Beispiel LWT ZU1 und LWT ZU 2) werden für die Kühlung der Zuluft eingesetzt. Sollte eine Entfeuchtung der Zuluft erforderlich sein, so wird ein weiterer Wärmeaustauscher für die ENTFEUCHTUNGSKÄLTE-RÜCKGEWINNUNG dann wieder für die Erwärmung der Zuluft genutzt. Wenn ein zusätzlicher Wärmeaustauscher als DEFROSTER die Außenluft vor dem FILTER zu weit herabkühlt, wird dieser nicht mehr mit Wärmeträger durchströmt. In diesem Betriebsfall kann beim Einsatz einer Wärmepumpe im Kreislaufverbundsystem KVS die Kondensationswärme über einen oder mehrere Wärmeaustauscher an die Fortluft übertragen werden.

### Betriebsfall 2

Es ist Kälterückgewinnung aus der unbehandelten oder der behandelten Abluft, z.B. adiabatische Befeuchtung, möglich:
In diesem Fall wird die Zuluft mit einem Kreislaufverbundsystem KVS, gebildet aus einem (zum Beispiel LWT AB 1) oder mehreren Wärmeaustauschern in der Abluft und einem (zum Beispiel LWT ZU1) oder mehreren Wärmeaustauschern in der Zuluft vorgekühlt. Ein Wärmeaustauscher (zum Beispiel LWT ZU2) mit separatem Wärmeträgerkreislauf WK2 und eigener Umwälzpumpe P2 kühlt die Zuluft auf die erforderliche Temperatur. Bei einer Zuluftfeuchteregelung wird die Zuluft mit einem zusätzlichen Wärmeaustauscher als Entfeuchtungsrückgewinnungswärmeaustauscher oder Nacherwärmer auf die gewünschte Zulufttemperatur erwärmt. Bei einer integrierten WÄRMEPUMPE überträgt ein zusätzlicher FORTLUFTWÄRMEAUSTAUSCHER die Kondensationsenergie an den Fortluftvolumenstrom FO. Zur Übertragung der Kondensationswärme kann auch ein Wärmeaustauscher (zum Beispiel LWT AB 1) aus dem Kreislaufverbundsystem KVS ausgegliedert werden.

Durch den Anschluss von mehreren Lüftungsanlagen an ein einziges Kreislaufverbundsystem KVS mit Hydraulikmodul gelingt es weiterhin erfindungsgemäß die Energie von einem zum anderen Lüftungssystem zu verschieben.

Eine wirtschaftliche Lösung beim Einsatz von mehreren Lüftungsanlagen mit Kreislaufverbundsystem KVS wird erreicht, wenn auch die Kälte-Wärme-Verschiebung von mehreren Lüftungsgeräten mit dem Verbundsystem mit integrierter WÄRMEPUMPE eingesetzt wird. In diesem Fall wird die Energie, die einem Lüftungsgerät entzogen wird (die Zuluft im Lüftungsgerät wird gekühlt) einem anderen Lüftungsgerät zugeführt (die Zuluft im anderen Lüftungsgerät wird erwärmt). Der Verdichter verbraucht in diesem Fall nur einmal Strom, aber der Energieeinsatz hat dabei einen zweifachen Nutzen. In diesem Fall Können auch Lüftungsgeräte eingebunden werden, die ein anders regeneratives oder rekuperatives Wärmerückgewinnungssystem als erste Stufe der Wärmerückgewinnung haben.

Ein weiterer Vorteil stellt sich ein, wenn die Wärmeaustauscher einen einzelnen Block ausbilden, wie in Figur 3 dargestellt, der mit zwei verschiedenen Wärmeträgerkreisen betrieben werden kann. Damit kann zum Beispiel der Platzbedarf für die Baulänge reduziert werden und die Reinigbarkeit wird erleichtert. Ebenfalls gibt es nur einmal den Anströmdruckverlust gegenüber zweimal Anströmdruckverlust bei zwei in Reihe geschalteten Wärmeaustauschern.

Beim Betrieb der Anlage können im Folgenden genannte Betriebsarten gewählt werden, um mit kleinstem Aufwand die gewünschte Zulufttemperatur zu erreichen:
1. Betrieb als Kreislaufverbundsystem ohne Energieeinkopplung:
   Dabei sind die Wärmeaustauscher LWT AB 1 / LWT AB 2 im Abluftvolumenstrom AB in Reihe geschaltet und die Wärmeaustauscher LWT ZU 1 / LWT ZU 2im Zuluftvolumenstrom ZU ebenfalls in Reihe geschaltet. Die Wärmeübertragung erfolgt über den im Kreislaufverbundsystem KVS zirkulierenden Wärmeträger sowohl für den Heiz- auch für den Kühlfall.
2. Betrieb mit integrierter Kälteerzeugung für die Zuluft aber keine Kälterückgewinnung aus der Abluft:
   Dabei durchströmt der von der WÄRMEPUMPE gekühlte Wärmeträger die in Reihe geschalteten Wärmeaustauscher LWT ZU1 / LWT ZU2 in der Zuluft, die Kondensatorabwärme wird über den Wärmeträger und den Wärmeaustauscher LWT AB1 in der Abluft an den Abluftvolumenstrom AB übertragen.
3. Betrieb mit integrierter Kälteerzeugung für die Zuluft:
   Es findet keine Kälterückgewinnung aus der Abluft statt, aber es wird mit ENTFEUCHTUNGSKÄLTERÜCKGEWINNUNG gearbeitet. Dabei durchströmt der Wärmeträger die in Reihe geschalteten Wärmeaustauscher LWT ZU1 / LWT ZU2, oder auch noch weitere hier nicht dargestellte Wärmeaustauscher, in der Zuluft. Zwischen dem in Strömungsrichtung letzten Wärmeaustauscher (hier dargestellt LWT ZU2) und einem nachfolgenden Wärmeaustauscher (ENT-FEUCHTUNGSKÄLTE-RÜCKGEWINNUNG) wird der Wärmeträger von der WÄRMEPUMPE gekühlt, bis zum Erreichen der gewünschten Zuluftfeuchte. Mit dem in Strömungsrichtung letzten Wärmeaustauscher (ENTFEUCHTUNGSKÄLTE-RÜCKGEWINNUNG) wird die Zuluft wieder auf die gewünschte Temperatur erwärmt, dabei wird der Wärmeträger vorgekühlt (ENTFEUCHTUNGSKÄLTE-RÜCKGEWINNUNG). Die Kondensatorabwärme wird über die Wärmeaustauscher an den Abluftvolumenstrom übertragen.
4. Betrieb als Kreislaufverbundsystem mit Kälteeinkopplung für die Zuluft:
   Hierbei wird mit dem im Abluftvolumenstrom AB ersten Wärmeaustauscher LWT AB1 und dem ersten Wärmeaustauscher LWT ZU1 im Zuluftvolumenstrom ZU ein Kreislaufverbundsystem KVS ausgebildet mit welchem die Zuluft vorgekühlt wird. Wird das Lüftungsgerät um ZULUFTGERÄT mit einem DEFROSTER betrieben, wird beim Überschreiten der zulässigen Feuchte vor dem FILTER der DEFROSTER vom System getrennt, indem dieser nicht mehr mit Wärmeträger durchströmt wird. Mit einem dem Kreislaufverbundsystem KVS folgendem Wärmeaustauscher LWT ZU2 im Zuluftvolumenstrom ZU wird die Zuluft auf die erforderliche Temperatur gekühlt und bei eventuell erforderlicher Zuluftfeuchteregelung mit einem weiteren Wärmeaustauscher als ENTFEUCHTUNGSKÄLTE-RÜCKGEWINNUNG auf die gewünschte Zulufttemperatur erwärmt.
5. Betrieb als Kreislaufverbundsystem mit externer Wärmeeinkopplung:
   Es werden die in der Abluft befindlichen Wärmeaustauscher LWT AB1 / LWT AB2 in Reihe geschaltet, ebenso die Wärmeaustauscher LWT ZU1 / LWT ZU2 in der Zuluft. Die Wärmeeinkopplung in den Wärmeträger erfolgt dabei vor den in Luftrichtung letzten Wärmeaustauscher, aber z.B. bei adiabatischer Befeuchtung der Zuluft, auch zusätzlich zwischen zwei Zuluftwärmeaustauscher.

Durch das erfindungsgemäße Zusammenwirken der Vorrichtungsbestandteile ist es möglich, die Zulufttemperatur konstant zu halten oder entsprechend einer Vorgabe bei maximaler Energieausbeute und minimalem Einsatz von Primärenergie nachzuregeln.

In bevorzugter Ausführungsform wird eine Schaltung gemäß Figur 1 gewählt, die zum Beispiel bei einem Vollklimagerät ergänzt werden kann, wenn sie um eine DEFROSTER und eine ENTFEUCHTUNGSKÄLTE-RÜCKGEWINNUNG ergänzt wird, wie dies in Figur 4 dargestellt ist. In Figur 2 ist die bevorzugte Ausführungsform mit einer integrierten WÄRMEPUMPE dargestellt. Ein aus Wärmetauscherschichten LW S1-3 aufgebauter Wärmeaustauscherblock LWT ZU 1-2 wird in einer bevorzugter Bauweise wird in Figur 3 und 3A dargestellt.

Mit Bezug auf Figur 2 ist noch folgende Verbesserung aus der Erfindung ableitbar: Zum Zweck der Kühlung der Zuluft ZU kann besonders viel Energie mittels der WÄRMEPUMPE über die Befeuchtungseinheit AK2 abgeführt werden, wenn der Wärmeaustauscher LWT AB1 und der FORTLUFTWÄRMEAUSTAUSCHER parallel mit der Kondensationswärme der WÄRMEPUMPE beaufschlagt werden. Der Wärmeaustauscher LWT AB1 und der FORTLUFTWÄRMETAUSCHER werden dazu in den Kreuzungen der Rohrverbindungen im Vorlauf der WÄRMEPUMPE zu den Wärmetauschern und im Rücklauf von den Wärmetauschern zur WÄRMEPUMPE mittels Dreiwegeventilen (in Fig. 2 nicht gezeigt) gekoppelt, so dass die WÄRMEPUMPE steuerbar mit beiden Wärmeaustauschereinheiten verbunden werden kann.

Weiterhin ist eine Figur 4-2 ergänzt um eine WÄRMEPUMPE mit Umwälzpumpen. Diese sind mit einem FORTLUFTWÄRMEAUSTAUSCHER und in einer Parallelschaltung dazu mit dem Wärmeaustauscher LWT AB1 über Dreiwegeventile gekoppelt. Zwischen dem FORTLUFTWÄRMEAUSTAUSCHER und dem Wärmeaustauscher LWT AB1 ist eine zusätzliche Befeuchtungseinheit AK2 angeordnet. Dies entspricht der Anordnung von Fig. 2. Dabei kann in dieser Schaltung der dem Wärmeaustauscher LWT AB1 zugeordnete Wärmeaustauscher LWT AB2 weiterhin in einem Kreislaufverbundsystem KVS geschaltet bleiben. Auch mit der Schaltung nach Fig. 4-2 wird eine starke Verbesserung der Energieübertragung im Bereich der Fortluft zum Zweck der Kühlung der Zuluft erreicht werden.

Kern der Erfindung ist also ein Kreislaufverbundsystem KVS zum Betrieb einer Wärmeaustauscheranordnung mit Energieeinkopplung im Heiz- und Kühlfall, wobei der größtmögliche Wirkungsgrad eines aus der Wärmeaustauscheranordnung gebildeten Kreislaufverbundsystems KVS erzielt wird. Dies gilt insbesondere für den Betrieb im Kühlfall. Zum Erreichen dieses Zieles im Kühlfallbetrieb kann die Energieeinkopplung soweit aus dem Kreislaufverbundsystem KVS ausgegrenzt werden, bis keine Energieeinkopplung in das Kreislaufverbundsystem KVS mehr erfolgt und die Kälteenergie in einem ausgegliederten weiteren Wärmeaustauscher (siehe LWT ZU2) mit eigenem Wärmeträgerkreislauf WK2 an die Zuluft im Zuluftvolumenstrom ZU übertragen wird. Hierbei kann besonders effektiv eine integrierte WÄRMEPUMPE eingesetzt werden.

## Patentansprüche

1. Kreislaufverbundsystem mit einer Einrichtung zur Energieeinkopplung und mindestens zwei Wärmeaustauschern (LWT ZU1, LWT ZU2) in einem Zuluftvolumenstrom (ZU) und mindestens einem Wärmeaustauscher (LWT AB1) in einem Abluftvolumenstrom (AB) eines Luftbehandlungssystems,
**dadurch gekennzeichnet, daß** im Kreislaufverbundsystem eine Einrichtung zur Bildung von Wärmeträgerkreisläufen (WK1, WK2) so vorgesehen ist, dass der Wärmeträgerstrom für die Wärmeaustauscher (LWT ZU1, LWT ZU2, LWT AB1) variabel verschaltet werden kann, derart dass entweder alle Wärmeaustauscher (LWT ZU1, LWT ZU2, LWT AB1) als ein Kreislaufverbundsystem (KVS) geschaltet werden oder dass mindestens ein Zuluftwärmeaustauscher (LWT ZU1) und mindestens ein Abluftwärmeaustauscher (LWT AB1) zu einem Kreislaufverbundsystem (KVS) in einem Wärmeträgerkreislauf (WK1) ausgebildet werden und mindestens ein weiterer Zuluftwärmeaustauscher (LWT ZU2) für die weitere Erwärmung oder Kühlung der Zuluft im Zuluftvolumenstrom (ZU) mit einem separaten Wärmeträgerkreislauf (WK2) angeordnet ist und betrieben werden kann.

2. Kreislaufverbundsystem nach Anspruch 1 mit einer integrierten WÄRMEPUMPE für die zusätzliche Wärmerückgewinnung und zur weiteren Erwärmung bzw. Kühlung der Zuluft im Zuluftvolumenstrom (ZU).

3. Kreislaufverbundsystem nach Anspruch 2 **dadurch gekennzeichnet, dass** die integrierter WÄRMEPUMPE für zusätzliche Wärmerückgewinnung zur weiteren Erwärmung bzw. Kühlung der Zuluft an der Stelle der Einrichtung zur E-nergieeinkoppelung angeordnet ist.

4. Kreislaufverbundsystem nach Anspruch 1 bis 3 mit mindestens einem weiteren Wärmeaustauscher im Zuluftvolumenstrom (ZU) für die ENTFEUCHTUNGSKÄLTE-RÜCKGEWINNUNG.

5. Kreislaufverbundsystem nach Anspruch 1 bis 4 mit mindestens einem weiteren Wärmeaustauscher im Zuluftvolumenstrom (ZU) als DEFROSTER.

6. Kreislaufverbundsystem nach Anspruch 1 bis 5 mit mindestens einem weiteren Wärmeaustauscher im Zuluftvolumenstrom (ZU) als Nacherwärmer oder Kondensator.

7. Kreislaufverbundsystem nach Anspruch 1 bis 6 mit einer Einspritzschaltung für mindestens einen Wärmeaustauscher zur Vermeidung von Temperatur- oder Feuchteschichtungen im Zuluftvolumenstrom (ZU).

8. Kreislaufverbundsystem nach Anspruch 1 bis 7 für den gemeinsamen Betrieb mehre Lüftungsgeräte oder Einzelbetrieb verschiedener Lüftungsgeräte.

9. Kreislaufverbundsystem nach Anspruch 1 bis 8 mit Einrichtungen zur Einkopplung von Energie vor dem Eintritt des Wärmeträgers in einen oder mehrere der Wärmeaustauscher.

10. Kreislaufverbundsystem nach Anspruch 1 bis 9 mit einem oder mehreren Wärmeaustauschern als Lamellenwärmeaustauscher, die in einem Luft- oder Gasvolumenstrom angeordnet sind und deren Lamellenwärmeaustauscherrohre und Sammler so geschaltet werden, dass der Wärmeaustauscher mindestens zwei autarke Wärmeträgerkreisläufe ausbildet.

11. Kreislaufverbundsystem nach Anspruch 1 bis 10 mit wenigstens einem geschichteten Wärmeaustauscher (LWT ZU1-2) in einem Luft- oder Gasvolumenstrom, wobei jeder der in dem Wärmeaustauscher (LWT ZU1-2) vorgesehenen Wärmeaustauscher (LWTZU1 / LWT ZU2) für sich einen einzelnen Wärmeaustauscher bilden, die mit leicht lösbaren Verbindungen zu einem Wärmeaustauscherblock zusammengefasst werden, deren Lamellenwärmeaustauscherrohre und Sammler so geschaltet werden, dass der Wärmeaustauscherblock mindestens zwei autarke Wärmeträgerkreisläufe ausbildet.

12. Kreislaufverbundsystem nach Anspruch 1 bis 11 mit einem adiabatischen oder hybriden Befeuchtungssystem, geregelt oder ungeregelt zwischen dem FORTLUFTWÄRMEAUSTAUSCHER und dem Abluftwärmeaustauscher (LWT AB1), wobei beide Wärmeaustauscher parallel mit der Kondensationswärme einer Wärmepumpe beaufschlagt werden.

## Claims

1. Circulation compound system with a device for energy coupling and at least two heat exchangers (LWT ZU1, LWT 2) in a flow volume of supply air (ZU) and at least one heat exchanger (LWT AB1) in a flow volume of exhaust air (AB) of an air treatment system,
**characterized by**
providing a facility for creating of heat carrier circuits (WK1, WK2) in the circulation compound system in that way that the flow of the heat carrier for the heat exchangers (LWT ZU1, LWT 2, LWT AB1) can be configured variably, so that either all heat exchangers (LWT ZU1, LWT 2, LWT AB1) are switched as a circulation compound system (KVS) or at least one supply air heat exchanger (LWT ZU1) and at least an exhaust heat exchanger (LWT AB1) are switched as a circuit compound system (KVS) to be trained in a heat carrier circuit (WK1) and at least a further supply air heat exchanger (LWT 2) is arranged and can be operated for additional heating or cooling the air in the volume flow in the supply air (ZU) with a separate heat carrier circuit (WK2).

2. Circulation compound system according to claim 1 with an integrated heat pump for additional heat recovery and further warming or cooling of the air in the volume flow of supply air (ZU).

3. Circulation compound system according to claim 2 **characterized in that** the integrated heat pump for additional heat recovery to further warming or cooling the supplied air is arranged in the place of a device for coupling an energy input.

4. Circulation compound system according to claim 1 to 3 with at least one additional heat exchanger in the volume flow of supply air (ZU) for recovery of dehumidification coldness.

5. Circulation compound system according to claim 1 to 4 with at least one additional heat exchanger in the volume flow of supply air (ZU) as a defroster.

6. Circulation compound system according to claim 1 to 5 with at least an additional heat exchanger in the volume flow of supply air (ZU) as a reheater or condenser.

7. Circulation compound system according to claim 1 to 6 with an injection switch for at least one heat exchanger to avoid stratification of temperature or humidity in the volume flow of supply air (ZU).

8. Circulation compound system according to claim 1 to 7 for the joint operation of multiple ventilation units or individual operation of various ventilation units.

9. Circulation compound system according to claim 1 to 8 with devices for coupling of energy in front of the entering of the heat carrier into one or more of the heat exchangers.

10. Circulation compound system according to claim 1 to 9 with one or more heat exchangers as lamellar heat exchangers, which are arranged in an air or gas volume flow and whose lamellar heat exchanger tubes and collectors are switched so that the heat exchanger forms at least two independent circuits of heat carrier.

11. Circulation compound system according to claim 1 to 10 with at least one layered heat exchanger (LWT ZU1-2) in a volume flow of air or gas, where any of the heat exchangers (LWTZU1 / LWT 2) provided in the heat exchanger (LWT ZU1-2) forms a single heat exchanger, which may be combined using easily detachable connections to a heat exchanger block, which lamellar heat exchanger tubes and collectors are switched so that the heat exchanger block forms from at least two independent circuits of heat carrier.

12. Circulation compound system according to claim 1 to 11 with an adiabatic or hybrid humidification system, being regulated or unregulated between the outgoing air heat exchanger and the exhaust heat exchanger (LWT AB1), where both heat exchangers are supplied in parallel with the condensation heat of a heat pump.

## Revendications

1. Boucle à eau glycolée avec un dispositif pour l'accouplement d'énergie et au moins deux échangeurs de chaleur (LWT ZU1, LWT ZU2) côté air soufflé (ZU) et au moins un échangeur de chaleur (LWT AB1) côté air repris (AB) d'un système de traitement de l'air,
**caractérisé par** l'existence de plusieurs circuits de transfert de chaleur (WK1, WK2), ce système permet à la circulation du flux de transfert de chaleur d'être variablement modifié pour les échangeurs de chaleur (LWT ZU1, LWT ZU 2, LWT AB1), de cette façon, tous les échangeurs de chaleur (LWT ZU1, LWT ZU2, LWT AB1) peuvent être utilisés en série dans une seule boucle (KVS), ou bien seulement un échangeur côté air soufflé (LWT ZU1) et un échangeur côté air repris (LWT AB1) forment une boucle (KVS) dans un circuit de transfert de chaleur (WK1), dans ce cas-là, un échangeur de chaleur supplémentaire côté air soufflé (LWT ZU2) fonctionne avec un circuit de transfert de chaleur séparé (WK2) pour un réchauffement ou refroidissement de l'air soufflé (ZU).

2. Boucle à eau glycolée selon la revendication 1
avec une pompe à chaleur intégrée pour la récupération de chaleur supplémentaire et pour un réchauffement respectivement refroidissement de l'air frais côté air soufflé.

3. Boucle à eau glycolée selon la revendication 2,
**caractérisé en ce que** seulement la pompe à chaleur intégrée est utilisée pour la récupération de chaleur supplémentaire pour le réchauffement respectivement refroidissement de l'air frais en tant que dispositif d'accouplement d'énergie.

4. Boucle à eau glycolée selon les revendications 1 à 3
avec au moins un échangeur de chaleur côté air soufflé (ZU) utilisé pour la déshumidification.

5. Boucle à eau glycolée selon les revendications 1 à 4
avec au moins un échangeur de chaleur supplémentaire côté air soufflé (ZU) utilisé comme dégivreur.

6. Boucle à eau glycolée selon les revendications 1 à 5
avec au moins un échangeur de chaleur côté air soufflé utilisé comme batterie post-chauffe ou condenseur.

7. Boucle à eau glycolée selon les revendications 1 à 6
avec un circuit d'injection pour au moins un échangeur de chaleur afin d'éviter une stratification de la température ou de l'humidité côté air soufflé (ZU).

8. Boucle à eau glycolée selon les revendications 1 à 7
pour l'utilisation commune de plusieurs appareils de ventilation ou pour l'utilisation individuelle de plusieurs appareils de ventilation.

9. Boucle à eau glycolée selon les revendications 1 à 8
avec des équipements pour l'accouplement de l'énergie avant l'entrée du transfert de chaleur dans un ou plusieurs échangeurs de chaleur.

10. Boucle à eau glycolée selon les revendications 1 à 9
avec un ou plusieurs échangeurs de chaleur à lamelles, installé dans le flux d'air ou de gaz et dont les tuyaux d'échange et les collecteurs sont connectés de sorte que l'échangeur de chaleur forme au moins deux circuits de transfert autarciques.

11. Boucle à eau glycolée selon les revendications 1 à 10
avec au moins un échangeur de chaleur stratifié (LWT ZU1-2) dans un flux d'air ou de gaz. Cependant, cet échangeur est constitué de deux échangeurs différents (LWTZU1 / LWT ZU2), séparés. Ils seront regroupés ensemble à l'aide de connexions facilement détachables. Les tuyaux d'échange et les collecteurs correspondants sont connectés de sorte que ce nouveau bloc d'échangeur forme au moins deux circuits de transfert de chaleur autarciques.

12. Boucle à eau glycolée selon les revendications 1 à 11
avec un système d'humidification adiabatique ou hybride, régulé ou non entre l'échangeur de chaleur côté air rejeté et côté air repris (LWT AB1), bien que chaque échangeur est relié à la pompe à chaleur parallèlement par le biais du condenseur.
